# EUROPEAN PATENT APPLICATION

(11) **EP 3 955 086 A1**
(43) Date of publication of application: **16.02.2022**
(21) Application number: 21188124.8
(22) Date of filing: 28.07.2021
(51) Int. Cl.: G05G 1/02, G05G 1/10, G05G 9/02, F16K 31/04, F24D 19/10

(54) **ROTARY PRESS CONTROL STRUCTURE AND SMART RADIATOR THERMOSTAT**

(30) Priority: 30.07.2020 CN 202021553696 U; 30.07.2020 CN 202021554316 U
(71) Applicant: Leedarson Lighting Co., Ltd., Zhangzhou, Fujian 363999 (CN)
(72) Inventor: LIN, Youqin, Zhangzhou, Fujian, 363999 (CN); ZHUANG, Jianqing, Zhangzhou, Fujian, 363999 (CN); GU, Zengping, Zhangzhou, Fujian, 363999 (CN); HE, Jian'an, Zhangzhou, Fujian, 363999 (CN); GUO, Songshan, Zhangzhou, Fujian, 363999 (CN); CAO, Liangliang, Zhangzhou, Fujian, 363999 (CN)
(74) Representative: Chimini, Francesco

(57) **Abstract**

The present application provides a smart radiator thermostat and pertains to the technical field of temperature control elements. The smart radiator thermostat includes a housing, a push rod, a drive component, and a control component. The housing is provided with an outlet configured to be connected to a valve. The push rod is slidably provided in the housing, and the push rod is configured to push an opening degree control end of the valve. The drive component is configured to drive the push rod to slide. The control component is configured to control the drive component. The control component acts as a rotary press control structure, comprising: a control board; a rotary encoder electrically connected to the control board and having an encoder shaft connected with a gear; a trigger button electrically connected to the control board; and a rotary cover provided with a ring of planetary teeth on its inner side, wherein the planetary teeth mesh with the gear, a key handle configured to touch the trigger button is provided in the rotary cover, the key handle is in contact with the trigger button by pressing the rotary cover from the outside, and a rotation of the rotary cover drives a rotation of the gear. The present application enables accurate control of the temperature.

## Description

### Technical Field

The present application pertains to the technical field of temperature control elements and more specifically relates to a smart radiator thermostat.

### Background Art

Currently, in the field of household heating systems, a radiator is usually equipped with a temperature control valve, which controls the temperature by controlling a flow rate of a water flow. The temperature control valves for radiators mainly include manual valves and self-operated regulating valves. Such valves can hardly accurately control the indoor temperature because their opening degrees are adjusted with great difficulty.

### Summary

The objective of the present application includes providing a smart radiator thermostat, which aims to solve the problems of the currently commercially available temperature control valves for radiators, mainly including manual valves and self-operated regulating valves which can hardly accurately control the indoor temperature because their opening degrees are adjusted with great difficulty.

In order to achieve at least one of the above objectives, a technical solution is adopted in the present application to provide a smart radiator thermostat, comprising a housing, a push rod, a drive component and a control component, wherein the housing is provided with an outlet configured to be connected to a valve; the push rod is slidably provided in the housing, and the push rod is configured to push an opening degree control end of the valve; the drive component is configured to drive the push rod to slide; and the control component is configured to control the drive component.

As another embodiment of the present application, the control component is a rotary press control structure, comprising: a control board; a rotary encoder, electrically connected to the control board and having an encoder shaft connected with a gear; a trigger button, electrically connected to the control board; and a rotary cover, provided with a ring of planetary teeth on its inner side, wherein the planetary teeth mesh with the gear, a key handle configured to touch the trigger button is provided in the rotary cover, the key handle is in contact with the trigger button by pressing the rotary cover from the outside, and a rotation of the rotary cover drives a rotation of the gear.

As another embodiment of the present application, the control component includes a control board and a signal input component, the signal input component includes a rotary encoder, a trigger button, and a manual operating end, both the rotary encoder and the trigger button are electrically connected to the control board, and the manual operating end includes a gear configured to drive a rotation of an encoder shaft of the rotary encoder and a key handle configured to touch the trigger button.

As another embodiment of the present application, the manual operating end further includes a rotary cover, the rotary cover is provided at one end of the housing, the rotary cover is provided with a key handle, the key handle is provided in the center of the rotary cover, and the key handle is in touch with the trigger button by squeezing the rotary cover; a ring of planetary teeth which mesh with the gear is provided on an inner side of the rotary cover, and a rotation of the rotary cover drives a rotation of the gear.

As another embodiment of the present application, the control board is covered by a fixing frame, a through hole into which the trigger button extends is provided in a middle portion of the fixing frame, the fixing frame is provided with a clearance opening from which part of gear teeth of the gear protrude, the rotary cover is rotatably connected to the fixing frame, and the planetary teeth mesh with the gear teeth protruding from the clearance opening; and the rotary cover is provided with an engaging member engaged with the through hole, and the engaging member is fitted with the through hole to enable rotatable connection between the rotary cover and the fixing frame.

As another embodiment of the present application, the push rod is provided with a threaded hole, and the drive component includes a motor and a screw rod, wherein the motor is connected to the housing; and the screw rod is connected to the motor, the screw rod is threadedly connected with the threaded hole, and the screw rod is configured to drive the push rod to slide.

As another embodiment of the present application, the fixing frame is provided with a plurality of first notches in each of which a first vibrating arm is provided, one end of the first vibrating arm is connected to the fixing frame, a free end of the first vibrating arm is provided with a first protrusion, and the first vibrating arms are configured to allow the rotary cover to return to its original position after being pressed.

As another embodiment of the present application, a plurality of grooves are provided in the rotary cover, the plurality of grooves are evenly distributed in a circumferential direction, the fixing frame is provided with a plurality of second notches in each of which a second vibrating arm is provided, one end of the second vibrating arm is connected to the fixing frame, a free end of the second vibrating arm is provided with a second protrusion, the second vibrating arms are placed correspondingly to the grooves, and the grooves are fitted with the second protrusions so that a feedback sound is generated when the rotary cover is rotated.

As another embodiment of the present application, a rotary press control structure includes: a control board; a rotary encoder, electrically connected to the control board and having an encoder shaft connected with a gear; a trigger button, electrically connected to the control board; and a rotary cover, provided with a ring of planetary teeth on its inner side, wherein the planetary teeth mesh with the gear, a key handle configured to touch the trigger button is provided in the rotary cover, the key handle is in contact with the trigger button by pressing the rotary cover from the outside, and a rotation of the rotary cover drives a rotation of the gear.

As another embodiment of the present application, the rotary encoder and the trigger button are provided on the control board; the control board is covered by a fixing frame, a through hole into which the trigger button extends is provided in a middle portion of the fixing frame, the fixing frame is provided with a clearance opening from which part of gear teeth of the gear protrude, the rotary cover is rotatably connected to the fixing frame, and the planetary teeth mesh with the gear teeth protruding from the clearance opening.

As another embodiment of the present application, the rotary cover is provided with an engaging member engaged with the through hole, and the engaging member is fitted with the through hole to enable rotatable connection between the rotary cover and the fixing frame; and a plurality of engaging members are evenly provided in a circumferential direction around the key handle.

As another embodiment of the present application, the fixing frame is provided with a plurality of first notches in each of which a first vibrating arm is provided, one end of the first vibrating arm is connected to the fixing frame, a free end of the first vibrating arm is provided with a first protrusion, and the first vibrating arms are configured to allow the rotary cover to return to its original position after being pressed.

As another embodiment of the present application, the first vibrating arms are evenly arranged in a circumferential direction along an edge of an upper plane of the fixing frame.

As another embodiment of the present application, a plurality of grooves are provided in the rotary cover, the plurality of grooves are evenly distributed in a circumferential direction, the fixing frame is provided with a plurality of second notches in each of which a second vibrating arm is provided, one end of the second vibrating arm is connected to the fixing frame, a free end of the second vibrating arm is provided with a second protrusion, the second vibrating arms are placed correspondingly to the grooves, and the grooves are fitted with the second protrusions so that a feedback sound is generated when the rotary cover is rotated.

As another embodiment of the present application, a middle portion of an upper plane of the rotary cover protrudes outward; and the key handle and the rotary cover are formed as an integral plastic part.

The smart radiator thermostat according to the present application has at least the following advantageous effects: Compared with the prior art, in the smart radiator thermostat in an embodiment of the present application, a push rod is slidably provided in the housing of the smart radiator thermostat, and the push rod slides to extend out of the outlet of the housing under the action of the drive component, to push the opening degree control end of the valve, thereby controlling the temperature by controlling the flow rate. An operator controls, by the control component, the drive component to drive a length of the push rod to extend outward, so as to enable more precise control of the temperature. The control component acts as a rotary press control structure comprising a control board, a rotary encoder, a trigger button and a rotary cover. The rotary cover can be deformed to drive the key handle to touch the trigger button so as to implement controls such as confirmation of product functions and wake-up of the product. When the rotary cover is rotated, the rotary cover drives a rotation of the gear so that the detailed parameters of performance are adjusted by means of the rotary encoder. In the present application, the rotation and press control are integrated into one part by using a simple structure. In this way, a simple appearance and an easy operation are achieved, and also the material and production costs are reduced, the adjustment of the opening degrees of such valves with great difficulty is avoided, and the technical effect of accurately controlling the indoor temperature is effectively achieved.

### Brief Description of the Drawings

In order to more clearly illustrate technical solutions of embodiments of the present disclosure, drawings required for use in the description of the embodiments or the prior art will be described briefly below. It is obvious that the drawings in the following description are merely illustrative of some embodiments of the present disclosure. It will be understood by those of ordinary skill in the art that other drawings can also be obtained from these drawings without any inventive effort.
FIG. 1 is a schematic structural diagram of a smart radiator thermostat according to an embodiment of the present application;
FIG. 2 is a sectional structural diagram taken along a line B-B in FIG. 1 according to an embodiment of the present application;
FIG. 3 is an exploded view of a rotary press control structure according to an embodiment of the present application;
FIG. 4 is a schematic structural diagram of a rotary cover according to an embodiment of the present application;
FIG. 5 is a schematic structural diagram of a control board assembled with a fixing frame according to an embodiment of the present application;
FIG. 6 is a schematic structural diagram of a rotary press control structure according to an embodiment of the present application; and
FIG. 7 is a sectional structural diagram taken along a line A-A in FIG. 6 according to an embodiment of the present application.

In the figures: 1. rotary cover; 2. first vibrating arm; 3. fixing frame; 4. clearance opening; 5. gear; 6. trigger button; 7. control board; 8. through hole; 9. second vibrating arm; 10. engaging member; 11. planetary teeth; 12. groove; 13. key handle; 14. light transmissive ring; 15. outer housing; 16. motor; 17. inner housing; 19. screw rod; 20. push rod.

### Detailed Description of the Embodiments

The present application will be described below in further detail with reference to the accompanying drawings and embodiments in order to further clarify the technical problems to be solved by the present application, and the technical solutions and advantageous effects of the present application. It should be understood that the specific embodiments described here are only intended to explain the present application, and are not intended to limit the present application.

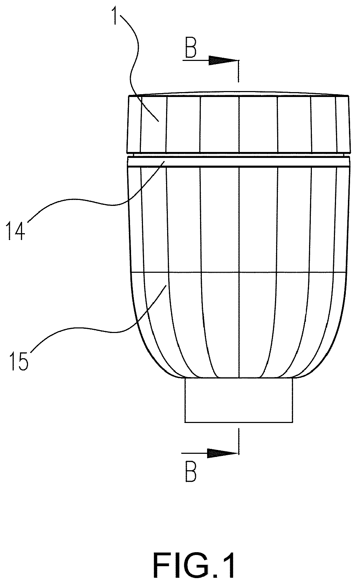

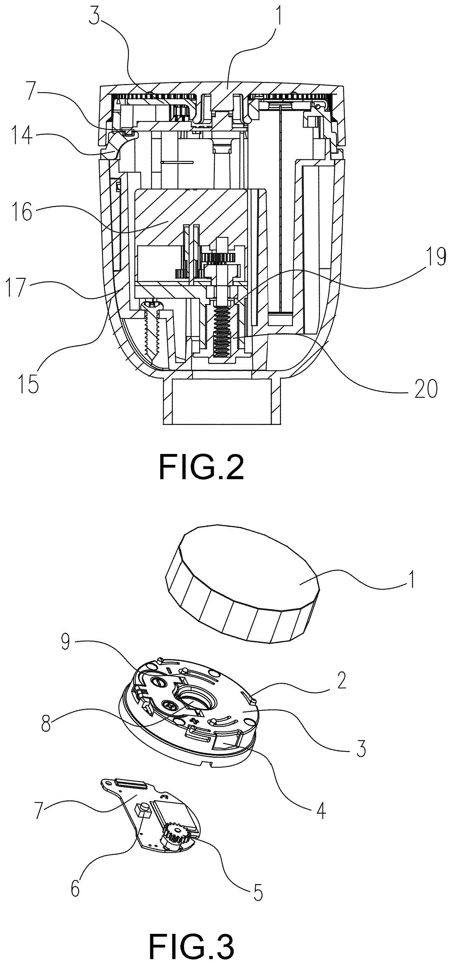

Referring to FIG. 1 to FIG. 7 in combination, a smart radiator thermostat according to the present application will now be described. As shown in FIGS. 1 and 2, as an example, the smart radiator thermostat includes a housing, a push rod 20, a drive component and a control component, wherein, optionally, the housing is provided with an outlet configured to be connected to a valve; the push rod 20 is slidably provided in the housing, and the push rod 20 is configured to push an opening degree control end of the valve; the drive component is configured to drive the push rod 20 to slide; and the control component is configured to control the drive component.

Compared with the prior art, the smart radiator thermostat according to the present application comprises a push rod 20 slidably provided in the housing of the smart radiator thermostat, and the push rod 20 slides to extend out of the outlet of the housing under the action of the drive component, to push the opening degree control end of the valve, thereby controlling the temperature by controlling the flow rate. An operator controls, by the control component, the drive component to drive a length of the push rod 20 to extend outward, so as to enable more precise control of the temperature.

In this embodiment, optionally, the valve is provided with a lifting pin, and different lifting distances of the lifting pin will result in different flow rates of the valve. Optionally, the smart radiator thermostat is connected to the valve, and the push rod 20 slides to different positions to push the lifting pin, thereby controlling the flow rate of the valve.

As a specific implementation of the smart radiator thermostat according to the present application, referring to FIGS. 1 to 2, the control component includes a control board 7 and a signal input component. The signal input component includes a rotary encoder, a trigger button 6, and a manual operating end. Both the rotary encoder and the trigger button 6 are electrically connected to the control board 7.

In this embodiment, the rotary encoder is a device that is used for measuring the rotational speed and enables rapid adjustment of the speed in cooperation with a PWM technology. When the encoder shaft of the rotary encoder is rotating, a corresponding phase is outputted. PWM is a method of digitally encoding an analog signal level. The control board 7 is a circuit board, and the control board 7 is provided with a controller. Both the rotary encoder and the trigger button 6 are provided on the control board 7.

In this embodiment, a light transmissive ring 14 is connected to the housing, and the control board 7 is connected to the housing via the light transmissive ring 14.

As a specific implementation of the smart radiator thermostat according to the present application, referring to FIGS. 3 to 4, the control component acts here as a rotary press control structure comprising a control board 7, a rotary encoder, a trigger button 6 and a rotary cover 1, wherein the rotary encoder is electrically connected to the control board 7, and the rotary encoder has an encoder shaft connected with a gear 5. The trigger button 6 is electrically connected to the control board 7. A ring of planetary teeth 11 is provided on the inner side of the rotary cover 1. The planetary teeth 11 mesh with the gear 5. A key handle 13 configured to touch the trigger button 6 is provided in the rotary cover 1. The key handle 13 is in contact with the trigger button 6 by pressing the rotary cover 1 from the outside. A rotation of the rotary cover 1 drives a rotation of the gear 5.

Optionally, referring to FIGS. 1 to 3, the manual operating end includes a gear 5 configured to drive a rotation of the encoder shaft of the rotary encoder and a key handle 13 configured to touch the trigger button 6.

Optionally, referring to FIGS. 1 to 3, the manual operating end further includes a rotary cover 1. The rotary cover 1 is provided at one end of the housing. The rotary cover 1 is provided with a key handle 13. The key handle 13 is provided at the center of the rotary cover 1. The key handle 13 is in touch with the trigger button 6 by squeezing the rotary cover 1.

Optionally, referring to FIGS. 1 to 3, a ring of planetary teeth 11 is provided on the inner side of the rotary cover 1, the planetary teeth 11 mesh with the gear 5, and a rotation of the rotary cover 1 drives a rotation of the gear 5.

In this embodiment, the gear 5 and the encoder shaft of the rotary encoder rotate coaxially. When the rotary cover 1 is rotated, the planetary teeth 11 drive the gear 5 meshed with the planetary teeth 11 to rotate, so that the encoder shaft of the rotary encoder rotates to output a corresponding phase to control a length of the push rod 20 to extend out of the outlet. A key handle 13 is provided in the rotary cover 1. The key handle 13 is opposite to the trigger button 6. The key handle 13 is in contact with the trigger button 6 by pressing the rotary cover 1 from the outside, which can achieve functions such as wake-up of the product and function confirmation. The rotary cover 1 can be automatically returned to its original position after being pressed.

Optionally, referring to FIGS. 3 to 7, the control board 7 is covered by a fixing frame 3. A through hole 8 is provided in the middle portion of the fixing frame 3. The trigger button 6 extends into the through hole 8. Screw holes are evenly distributed in the circumferential direction along the edge of the upper plane of the fixing frame 3. The fixing frame 3 is provided with a clearance opening 4. Part of the gear teeth of the gear 5 protrude from the clearance opening 4. The rotary cover 1 is rotatably connected to the fixing frame 3. The planetary teeth 11 mesh with the gear teeth protruding from the clearance opening 4.

In this embodiment, a through hole 8 is provided in the middle portion of the fixing frame 3. The trigger button 6 extends into the through hole 8. The fixing frame 3 is provided with a clearance opening 4. Part of the gear teeth of the gear 5 protrude from the clearance opening 4. The rotary cover is connected to the fixing frame 3. The rotary cover 1 is rotatable around its own axis. A ring of planetary teeth 11 is provided on the inner side of the rotary cover 1. The planetary teeth 11 mesh with the gear teeth protruding from the clearance opening 4. A key handle 13 is provided in the rotary cover 1. When in use, if the rotary cover 1 is pressed, the rotary cover 1 can be deformed to drive the key handle 13 to touch the trigger button 6 so as to implement control such as conformation of product functions. If the rotary cover 1 is rotated, the rotary cover 1 drives the gear 5 to rotate so that detailed parameters are adjusted by means of the rotary encoder.

Optionally, referring to FIGS. 3 to 7, the rotary cover 1 is provided with an engaging member 10. The engaging member 10 is engaged with the through hole 8, and the engaging member 10 is fitted with the through hole 8 to enable rotatable connection of the rotary cover 1 to the fixing frame 3.

In this embodiment, the rotary cover 1 is engaged with the fixing frame 3, which facilitates disassembly. Eight engaging members 10 are provided. The eight engaging members 10 are evenly arranged in the circumferential direction around the key handle 13, so as to enable limited movement and unlimited rotation of the rotary cover 1.

As a specific implementation of the embodiment of the present application, referring to FIGS. 1 to 2, the push rod 20 is provided with a threaded hole. The drive component includes a motor 16 and a screw rod 19. The motor 16 is connected to the housing. The screw rod 19 is connected to the motor 16. The screw rod 19 is threadedly connected to the threaded hole. The screw rod 19 is configured to drive the push rod 20 to slide.

In this embodiment, the motor 16 is a stepping motor 16. The housing includes an inner housing 17 and an outer housing 15. The outlet is provided in the outer housing 15. The outer housing 15 is provided outside the inner housing 17. The motor 16 is installed in the inner housing 17. The output end of the motor 16 may be decelerated by a gear transmission structure such as a reducer and then connected to the screw rod 19. A slideway is provided in the inner housing 17. The push rod 20 is slidably provided in the slideway. The slideway is opposite to the outlet. The push rod 20 may extend into the outlet through the slideway and be in contact with the lifting pin of the valve from the outlet. The motor 16 drives the screw rod 19 to rotate. The rotation of the screw rod 19 drives the push rod 20 to slide, because the push rod 20 is provided with a threaded hole to which the screw rod 19 is threadedly connected.

Optionally, referring to FIGS. 3 to 7, the fixing frame 3 is provided with a plurality of first notches in each of which a first vibrating arm 2 is provided. One end of the first vibrating arm 2 is connected to the fixing frame 3. The free end of the first vibrating arm 2 is provided with a first protrusion. The first vibrating arms 2 are configured to allow the rotary cover 1 to return to its original position after being pressed.

In this embodiment, the first vibrating arm 2 has one end connected to the fixing frame 3, and the other end freely released as a free end. Three first vibrating arms 2 are provided, and the first vibrating arms 2 are evenly arranged in the circumferential direction along the edge of the upper plane of the fixing frame 3. When the rotary cover 1 is pressed, the elastic force of the trigger button 6 allows it to automatically return to its original position. The first vibrating arms 2 are now additionally provided to assist the rotary cover 1 in returning to its original position after being pressed, so that the rotary cover 1 can return to its original position more quickly. When the rotary cover 1 is pressed, the rotary cover 1 touches the first protrusions while being pressed downward, and the free ends of the first vibrating arms 2 are pressed downward. When it is released, the free ends of the first vibrating arms 2 return to their original positions due to the elasticity of the first vibrating arms 2 to push the rotary cover 1 to return to its original position.

Optionally, referring to FIGS. 3 to 7, a plurality of grooves 12 are provided in the rotary cover 1. The plurality of grooves 12 are evenly distributed in the circumferential direction. The fixing frame 3 is provided with a plurality of second notches in each of which a second vibrating arm 9 is provided. One end of the second vibrating arm 9 is connected to the fixing frame 3. The free end of the second vibrating arm 9 is provided with a second protrusion. The second vibrating arms 9 are placed correspondingly to the grooves 12, and the grooves 12 are fitted with the second protrusions so that a feedback sound is generated when the rotary cover 1 is rotated.

In this embodiment, the second vibrating arms 9 are placed correspondingly to the grooves 12. When the rotary cover 1 is rotated, the second protrusions of the second vibrating arms 9 will spring up and down to produce a ticking feedback sound because of being fitted with the grooves 12 evenly provided in the circumferential direction. In this embodiment, two second vibrating arms 9 are provided.

As a specific implementation of the rotary press control structure according to the present application, referring to FIGS. 3 to 4, the rotary press control structure according to the present application will now be described. The rotary press control structure includes a control board 7, a rotary encoder, a trigger button 6, and a rotary cover 1. The rotary encoder is electrically connected to the control board 7, and the rotary encoder has an encoder shaft connected with a gear 5. The trigger button 6 is electrically connected to the control board 7. A ring of planetary teeth 11 is provided on the inner side of the rotary cover 1. The planetary teeth 11 mesh with the gear 5. A key handle 13 configured to touch the trigger button 6 is provided in the rotary cover 1. The key handle 13 is in contact with the trigger button 6 by pressing the rotary cover 1 from the outside. A rotation of the rotary cover 1 drives a rotation of the gear 5.

Compared with the prior art, in the rotary press control structure according to the present application, a control board 7 is electrically connected to a rotary encoder and a trigger button 6, and the rotary encoder is connected with a gear 5 that controls a rotation of the rotary encoder for encoding. The rotary cover 1 is rotatable. A ring of planetary teeth 11 is provided on the inner side of the rotary cover 1. The planetary teeth 11 mesh with the gear teeth protruding from the clearance opening 4. A key handle 13 is provided in the rotary cover 1. When in use, if the rotary cover 1 is pressed, the rotary cover 1 can be deformed to drive the key handle 13 to touch the trigger button 6 so as to implement controls such as confirmation of product functions and wake-up of the product. If the rotary cover 1 is rotated, the rotary cover 1 drives a rotation of the gear 5 so that the detailed parameters of performance are adjusted by means of the rotary encoder. In the present application, the rotation and press control are integrated into one part by using a simple structure. In this way, a simple appearance and an easy operation are achieved, and also the material and production costs are reduced.

Optionally, referring to FIGS. 3 to 5, the rotary encoder and the trigger button 6 are provided on the control board 7.

Optionally, referring to FIGS. 3 to 5, the control board 7 is covered by a fixing frame 3. A through hole 8 is provided in the middle portion of the fixing frame 3. The trigger button 6 extends into the through hole 8. The fixing frame 3 is provided with a clearance opening 4. Part of the gear teeth of the gear 5 protrude from the clearance opening 4. The rotary cover 1 is rotatably connected to the fixing frame 3. The planetary teeth 11 mesh with the gear teeth protruding from the clearance opening 4.

In this embodiment, the control board 7 is provided with a rotary encoder and a trigger button 6, and the rotary encoder is connected with a gear 5 that controls a rotation of the rotary encoder for encoding. A through hole 8 is provided in the middle portion of the fixing frame 3. The trigger button 6 extends into the through hole 8. The fixing frame 3 is provided with a clearance opening 4. Part of the gear teeth of the gear 5 protrude from the clearance opening 4. The rotary cover is connected to the fixing frame 3. The rotary cover 1 is rotatable around its own axis. A ring of planetary teeth 11 is provided on the inner side of the rotary cover 1. The planetary teeth 11 mesh with the gear teeth protruding from the clearance opening 4. A key handle 13 is provided in the rotary cover 1. When in use, if the rotary cover 1 is pressed, the rotary cover 1 can be deformed to drive the key handle 13 to touch the trigger button 6 so as to implement control such as conformation of product functions. If the rotary cover 1 is rotated, the rotary cover 1 drives the gear 5 to rotate so that detailed parameters of performance are adjusted by means of the rotary encoder.

Optionally, referring to FIGS. 3 to 7, the rotary cover 1 is provided with an engaging member 10. The engaging member 10 is engaged with the through hole 8, and the engaging member 10 is fitted with the through hole 8 to enable rotatable connection of the rotary cover 1 to the fixing frame 3.

In this embodiment, the rotary cover 1 is engaged with the fixing frame 3, which facilitates disassembly.

As a specific implementation of the embodiment of the present application, referring to FIGS. 3 to 7, a plurality of engaging members 10 are evenly provided in the circumferential direction around the key handle 13.

In this embodiment, eight engaging members 10 are provided to enable limited movement and unlimited rotation of the rotary cover 1.

Optionally, referring to FIGS. 3 to 5, the fixing frame 3 is provided with a plurality of first notches in each of which a first vibrating arm 2 is provided. One end of the first vibrating arm 2 is connected to the fixing frame 3. The free end of the first vibrating arm 2 is provided with a first protrusion. The first vibrating arms 2 are configured to allow the rotary cover 1 to return to its original position after being pressed.

In this embodiment, the first vibrating arm 2 has one end connected to the fixing frame 3, and the other end freely released as a free end.

Optionally, referring to FIGS. 3 to 5, the first vibrating arms 2 are evenly arranged in the circumferential direction along the edge of the upper plane of the fixing frame 3.

In this embodiment, three first vibrating arms 2 are provided, and the first vibrating arms 2 are evenly arranged in the circumferential direction along the edge of the upper plane of the fixing frame 3. When the rotary cover 1 is pressed, the elastic force of the trigger button 6 allows it to automatically return to its original position. The first vibrating arms 2 are now additionally provided to assist the rotary cover 1 in returning to its original position after being pressed, so that the rotary cover 1 can return to its original position more quickly. When the rotary cover 1 is pressed, the rotary cover 1 touches the first protrusions while being pressed downward, and the free ends of the first vibrating arms 2 are pressed downward. When it is released, the free ends of the first vibrating arms 2 return to their original positions due to the elasticity of the first vibrating arms 2, to push the rotary cover 1 to return to its original position.

Optionally, referring to FIGS. 3 to 5, a plurality of grooves 12 are provided in the rotary cover 1. The plurality of grooves 12 are evenly distributed in the circumferential direction. The fixing frame 3 is provided with a plurality of second notches in each of which a second vibrating arm 9 is provided. One end of the second vibrating arm 9 is connected to the fixing frame 3. The free end of the second vibrating arm 9 is provided with a second protrusion. The second vibrating arms 9 are placed correspondingly to the grooves 12, and the grooves 12 are fitted with the second protrusions so that a feedback sound is generated when the rotary cover 1 is rotated.

In this embodiment, the second vibrating arms 9 are placed correspondingly to the grooves 12. When the rotary cover 1 is rotated, the second protrusions of the second vibrating arms 9 will spring up and down to produce a ticking feedback sound because of being fitted with the grooves 12 evenly provided in the circumferential direction. In this embodiment, two second vibrating arms 9 are provided.

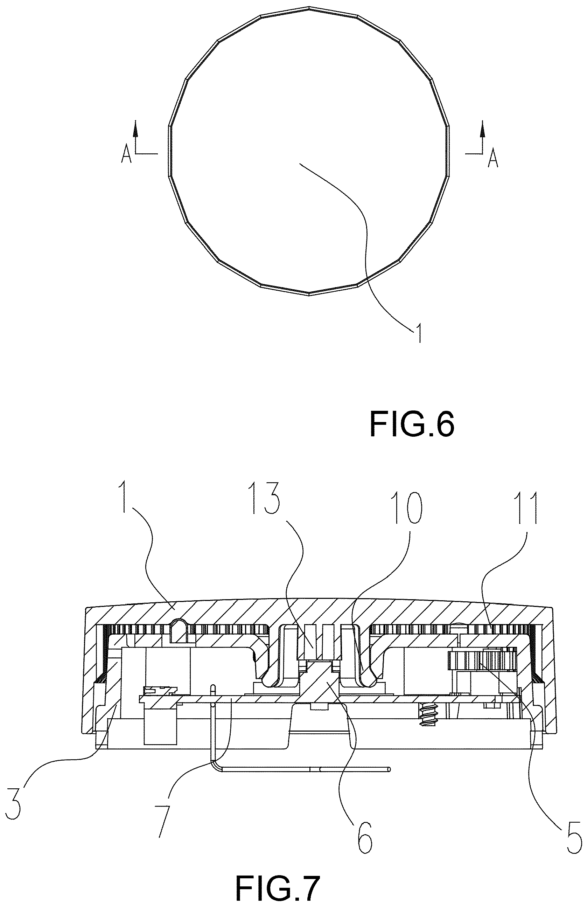

As a specific implementation of the embodiment of the present application, referring to FIGS. 6 to 7, the key handle 13 is provided in the middle portion of the rotary cover 1, and the middle portion of the upper plane of the rotary cover 1 protrudes outward.

In this embodiment, the rotary cover 1 has a protruding middle portion so as to be accurately pressed by an operator.

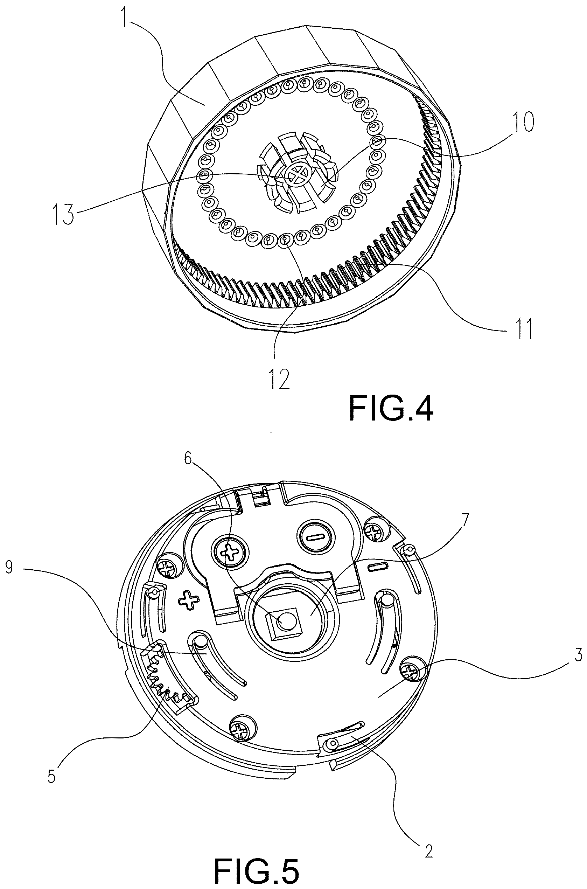

Optionally, referring to FIG. 4, the key handle 13 is a part made of rubber.

Compared with the prior art, in the smart radiator thermostat according to the above embodiment of the present application, a push rod slidably is provided in the housing of the smart radiator thermostat, and the push rod slides to extend out of the outlet of the housing under the action of the drive component, to push the opening degree control end of the valve, thereby controlling the temperature by controlling the flow rate. An operator controls, by the control component, the drive component to drive an extending length of the push rod, so as to enable more precise control for the temperature. Moreover, the control component is provided as a rotary press control structure comprising a control board, a rotary encoder, a trigger button and a rotary cover, wherein the rotary cover can be deformed to drive the key handle to touch the trigger button so as to implement controls such as confirmation of product functions and wake-up of the product. When the rotary cover is rotated, the rotary cover drives a rotation of the gear so that the detailed parameters of performance are adjusted by means of the rotary encoder. In brief, in the present application, the rotation and press control are integrated into one part by using a simple structure. In this way, a simple appearance and an easy operation are achieved, and also the material and production costs are reduced, the adjustment of the opening degrees of such valves with great difficulty is avoided, and the technical effect of accurately controlling the indoor temperature is effectively achieved.

The above description is merely illustrative of preferred embodiments of the present application and is not intended to limit the present application. Any modifications, equivalent alternatives, improvements and so on made within the spirit and principle of the present application are intended to be encompassed within the scope of protection of the present application.

### Industrial Applicability

In the smart radiator thermostat in an embodiment of the present application, a rotary cover is deformable to drive the key handle to touch the trigger button so as to implement controls such as confirmation of product functions and wake-up of the product. When the rotary cover is rotated, the rotary cover drives a rotation of the gear so that the detailed parameters of performance are adjusted by means of the rotary encoder. In the present application, the rotation and press control are integrated into one part by using a simple structure. In this way, a simple appearance and an easy operation are achieved, and also the material and production costs are reduced, the adjustment of the opening degrees of such valves with great difficulty is avoided, and the technical effect of more accurately controlling the temperature is effectively achieved.

## Claims

1. A rotary press control structure, **characterized by** comprising:
a control board (7);
a rotary encoder, electrically connected to the control board (7), wherein the rotary encoder has an encoder shaft connected with a gear (5);
a trigger button (6), electrically connected to the control board (7); and
a rotary cover (1), wherein a ring of planetary teeth (11) is provided on an inner side of the rotary cover (1), wherein the planetary teeth (11) mesh with the gear (5), a key handle (13) configured to touch the trigger button (6) is provided in the rotary cover (1), wherein the key handle (13) is in contact with the trigger button (6) by pressing the rotary cover (1) from outside, and the rotary cover (1) is rotated to drive the gear (5) to rotate.

2. The rotary press control structure according to claim 1, wherein the rotary encoder and the trigger button (6) are provided on the control board (7); the control board (7) is covered by a fixing frame (3), wherein a through hole (8) is provided in a middle portion of the fixing frame (3), wherein the trigger button (6) extends into the through hole (8), and the fixing frame (3) is provided with a clearance opening (4), wherein part of gear teeth of the gear (5) protrude from the clearance opening (4), and the planetary teeth (11) mesh with the gear teeth protruding from the clearance opening (4).

3. The rotary press control structure according to claim 2, wherein the rotary cover (1) is provided with engaging members (10), wherein the engaging members (10) are engaged with the through hole (8), and the engaging members (10) are fitted with the through hole (8) to enable a rotatable connection between the rotary cover (1) and the fixing frame (3); and a plurality of engaging members (10) are evenly arranged in a circumferential direction around the key handle (13).

4. The rotary press control structure according to claim 2, wherein the fixing frame (3) is provided with a plurality of first notches, wherein a first vibrating arm (2) is provided in each of the first notches, wherein the first vibrating arm (2) has one end connected to the fixing frame (3), a free end of the first vibrating arm (2) is provided with a first protrusion, and the first vibrating arm (2) is configured to allow the rotary cover (1) to return to an original position after being pressed.

5. The rotary press control structure according to claim 4, wherein first vibrating arms (2) are evenly arranged in a circumferential direction along an edge of an upper plane of the fixing frame (3).

6. The rotary press control structure according to claim 2, wherein a plurality of grooves (12) are provided in the rotary cover (1), the plurality of grooves (12) are evenly distributed in a circumferential direction, the fixing frame (3) is provided with a plurality of second notches, a second vibrating arm (9) is provided in each of the second notches, wherein the second vibrating arm (9) has one end connected to the fixing frame (3), a free end of the second vibrating arm (9) is provided with a second protrusion, second vibrating arms (9) are placed correspondingly to the grooves (12), and the grooves (12) are fitted with second protrusions so that a feedback sound is generated when the rotary cover (1) is rotated.

7. The rotary press control structure according to claim 1, wherein a middle portion of an upper plane of the rotary cover (1) protrudes outward; and the key handle (13) and the rotary cover (1) are provided as an integral plastic part.

8. A smart radiator thermostat, **characterized by** comprising:
a housing, provided with an outlet configured to be connected to a valve;
a push rod (20), slidably provided in the housing and configured to push an opening degree control end of the valve;
a drive component, configured to drive the push rod (20) to slide; and
a control component, configured to control the drive component, wherein the control component is the rotary press control structure according to claim 1-7.

9. The smart radiator thermostat according to claim 8, wherein the control component, comprising:
a control board (7);
a rotary encoder, electrically connected to the control board (7), wherein the rotary encoder has an encoder shaft connected with a gear (5);
a trigger button (6), electrically connected to the control board (7); and
a rotary cover (1), wherein a ring of planetary teeth (11) is provided on an inner side of the rotary cover (1), wherein the planetary teeth (11) mesh with the gear (5), a key handle (13) configured to touch the trigger button (6) is provided in the rotary cover (1), wherein the key handle (13) is in contact with the trigger button (6) by pressing the rotary cover (1) from outside, and the rotary cover (1) is rotated to drive the gear (5) to rotate.

10. The smart radiator thermostat according to claim 8 or 9, wherein the control component comprises a control board (7) and a signal input component, wherein the signal input component comprises a rotary encoder, a trigger button (6) and a manual operating end, both the rotary encoder and the trigger button (6) are electrically connected to the control board (7), and the manual operating end comprises a gear (5) configured to drive an encoder shaft of the rotary encoder to rotate, and a key handle (13) configured to touch the trigger button (6).

11. The smart radiator thermostat according to claim 10, wherein the manual operating end further comprises a rotary cover (1), wherein the rotary cover (1) is provided at one end of the housing, and the rotary cover (1) is provided with a key handle (13), wherein the key handle (13) is provided in a center of the rotary cover (1), and the key handle (13) is in touch with the trigger button (6) by squeezing the rotary cover (1); and a ring of planetary teeth (11) is provided on an inner side of the rotary cover (1), wherein the planetary teeth (11) mesh with the gear (5), and the rotary cover (1) is rotated to drive the gear (5) to rotate.

12. The smart radiator thermostat according to claim 11, wherein the control board (7) is covered by a fixing frame (3), wherein a through hole (8) is provided in a middle portion of the fixing frame (3), wherein the trigger button (6) extends into the through hole (8), the fixing frame (3) is provided with a clearance opening (4), wherein part of gear teeth of the gear (5) protrude from the clearance opening (4), and the planetary teeth (11) mesh with the gear teeth protruding from the clearance opening (4); and the rotary cover (1) is provided with an engaging member (10), wherein the engaging member (10) is engaged with the through hole (8), and the engaging member (10) is fitted with the through hole (8) to enable a rotatable connection between the rotary cover (1) and the fixing frame (3).

13. The smart radiator thermostat according to claim 8, wherein the push rod (20) is provided with a threaded hole, and the drive component comprises:
a motor (16), connected to the housing; and
a screw rod (19), connected to the motor (16), wherein the screw rod (19) is threadedly connected to the threaded hole, and the screw rod (19) is configured to drive the push rod (20) to slide.

14. The smart radiator thermostat according to claim 12, wherein the fixing frame (3) is provided with a plurality of first notches, wherein a first vibrating arm (2) is provided in each of the first notches, the first vibrating arm (2) has one end connected to the fixing frame (3), a free end of the first vibrating arm (2) is provided with a first protrusion, and the first vibrating arm (2) is configured to allow the rotary cover (1) to return to an original position after being pressed.

15. The smart radiator thermostat according to claim 12, wherein a plurality of grooves (12) are provided in the rotary cover (1), the plurality of grooves (12) are evenly distributed in a circumferential direction, the fixing frame (3) is provided with a plurality of second notches, a second vibrating arm (9) is provided in each of the second notches, wherein the second vibrating arm (9) has one end connected to the fixing frame (3), a free end of the second vibrating arm (9) is provided with a second protrusion, second vibrating arms (9) are placed correspondingly to the grooves (12), and the grooves (12) are fitted with second protrusions so that a feedback sound is generated when the rotary cover (1) is rotated.
